# EUROPÄISCHE PATENTSCHRIFT

(11) **EP 2 172 717 B1**
(45) Veröffentlichungstag und Bekanntmachung des Hinweises auf die Patenterteilung: **09.11.2016**
(21) Anmeldenummer: 09171205.9
(22) Anmeldetag: 24.09.2009
(51) Int. Cl.: F24H 8/00

(54) **Heizgerät**
Heating device
Appareil de chauffage

(30) Priorität: 01.10.2008 DE 202008013120 U
(43) Veröffentlichungstag der Anmeldung: 07.04.2010
(73) Patentinhaber: Robert Bosch GmbH, 70469 Stuttgart (DE)
(72) Erfinder: Etrich, Thomas, 35578 Wetzlar (DE)

(56) Entgegenhaltungen:
- DE-A1- 3 333 747
- DE-A1- 19 923 546
- DE-U1- 9 112 866
- DE-U1- 9 200 785
- US-A- 4 611 622
- US-A- 5 375 586

## Beschreibung

Die Erfindung betrifft ein Heizgerät zur Brennwertnutzung durch kondensierenden Betrieb nach dem Oberbegriff des Patentanspruches 1. solch ein Heizgerät ist z.B. aus der DE 19 923 546 A1 bekannt.

Derartige Heizgeräte besitzen mit einen öl- oder gasbefeuerten Gebläsebrenner, eine direkt an das Gebläse angeschlossene Verbrennungsluftzuführungsleitung, eine Abgasleitung sowie eine Kondenswasserleitung für das aus einem Wärmetauscher austretende, bei der Abkühlung der Heizgase entstehende Kondenswasser. In die Kondenswasserleitung ist in der Regel dicht am Heizgerät ein Siphon eingebaut, um einen Abgasaustritt zu verhindern. Dieser weist eine Kammer mit einer Wasservorlage, einen Stutzen zum Anschließen einer Ablaufleitung zur Kanalisation und einen nach oben gerichteten Entlüftungsstutzen auf.

Die Heizgeräte kommen vermehrt mit einer raumluftunabhängigen Verbrennungsluftzuführung zum Einsatz. Sie sind dann mit einer kombinierten Luft-/Abgas-Leitung versehen, wobei die Verbrennungsluftzuführungsleitung direkt an das Gebläse angeschlossen ist. Dadurch wird eine Aufstellung der Geräte an vielen Orten eines Gebäudes, beispielsweise auch in Wohnräumen, möglich. Aus diesem Grund müssen im Betrieb sowie bei Wartungsarbeiten Geruchsbelästigungen ausgeschlossen werden, die möglicherweise durch die Verwendung des Brennstoffes Heizöl oder durch geringfügige Abgasaustritte entstehen können. Im zweiten Fall sind auch Sicherheitsbestimmungen zu beachten.

So ist aus der DE 202 10 421 U1 eine Verbindungsleitung zwischen der Entlüftungseinrichtung eines Ölfilters und der Saugseite eines Gebläses bekannt. Damit können beim Entlüften des Ölfilters entstehende Ölgerüche oder auch kleinere Öltröpfchen abgesaugt und der Verbrennungsluft zugeführt werden.

Bei der Inbetriebnahme eines Brennwert-Heizgerätes ist es möglich, das in einem Siphon zunächst kein Wasser angesammelt ist, und dass geringe Abgasmengen über die nur wasserdicht ausgeführte Ablaufleitung austreten können. Es sind dabei nur wenige Minuten Betriebszeit nötig, bis im Siphon die Sperrwirkung wieder hergestellt ist, also bis genügend Kondenswasser gebildet und im Siphon gesammelt ist. Eine Befüllung des relativ kompakten Kunststoffgehäuses von Hand ist nicht vorgesehen oder wäre nur mit einem Lösen von Leitungsverbindungen möglich. Die Austrocknung eines Siphons tritt besonders in Anlagen mit langen Stillstandszeiten auf, beispielsweise verursacht durch integrierte Solaranlagen oder Biomasse-Kessel, welche die Wärmebereitstellung vollständig übernehmen können, so dass das Heizgerät über viele Wochen nicht laufen muss.

Der Erfindung liegt die Aufgabe zu Grunde, bei einem Heizgerät das Entweichen von Abgas in einen Aufstellraum über einen Siphon zu vermeiden.

Erfindungsgemäß wurde dies mit den Merkmalen des Patentanspruches 1 gelöst. Vorteilhafte Weiterbildungen sind den Unteransprüchen zu entnehmen.

Gekennzeichnet ist das Heizgerät dadurch, dass der Entlüftungsstutzen des Siphons mit einer Verbindungsleitung an die Saugseite des Gebläses angeschlossen ist, also einem Bereich, indem Unterdruck herrscht.

Vorzugsweise wird dabei der Entlüftungsstutzen des Siphons mit der Verbindungsleitung an einen ohnehin vorhandenen Messstutzen, beispielsweise zur Erfassung der Temperatur der Zuluft, in der Verbrennungsluftzuführungsleitung angeschlossen. Falls bei Wartungs- und Einstellarbeiten eine Messung erfolgen muss, lässt sich die Verbindungsleitung einfach vom Stutzen abziehen. Vorteilhafterweise wird daher die Verbindungsleitung als flexibler Schlauch ausgeführt. Dieser benötigt somit nur einen geringen Durchmesser, etwa von wenigen Millimetern.

Die Verbindungsleitung zwischen Siphon und Saugseite des Gebläses wird vorzugsweise mindestens auf einem Teilstück mit einer Steigung in Richtung Gebläse verlegt ist. Dadurch wird sichergestellt, dass sich möglicherweise in der Verbindungsleitung niederschlagendes Kondenswasser wieder in Richtung Siphon zurück läuft bzw. dass auf keinen Fall Wassertropfen angesaugt werden.

In einer weiteren Ausführungsform kann die Verbindungsleitung zwischen Siphon und Saugseite des Gebläses auch mit einer weiteren Verbindungsleitung zwischen der Entlüftungseinrichtung eines Ölfilters und der Saugseite des Gebläses kombiniert sein. Dann werden beispielsweise beide Schlauchleitungen zusammengeführt und münden gemeinsam in einen Stutzen auf der Saugseite des Gebläses ein.

Mit der Erfindung wird bei einem Heizgerät das Entweichen von Abgas in den Aufstellraum über die Kondenswasserleitung, im Falle eines ausgetrockneten Siphons, sicher vermieden. Trotzdem steht der vorhandene Messstutzen auf der Saugseite des Gebläses weiter hin für seinen eigentlichen Zweck zur Verfügung. Das Herstellen der Verbindungsleitung ist sehr einfach realisierbar und auch im Betrieb oder bei Wartungsarbeiten leicht zu kontrollieren.

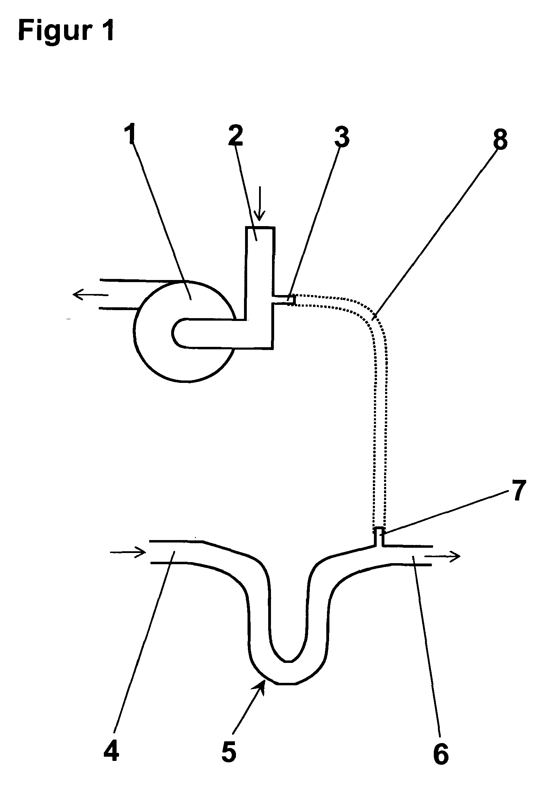

Die Zeichnung stellt ein Ausführungsbeispiel der Erfindung dar und zeigt in einer einzigen Figur schematisch den erfindungsgemäßen Prinzip-Aufbau an einem Heizgerät.

In ein Gebläse 1 mündet eine Verbrennungsluftzuführungsleitung 2, welche einen Messstutzen 3 aufweist. Weiterhin ist ein über eine Kondenswasserleitung 4 an eine Abgasleitung angeschlossener Siphon 5 dargestellt. Dieser ist im regulären Betrieb mit Wasser gefüllt und besitzt einen Stutzen 6 zum Anschließen einer Ablaufleitung zur Kanalisation sowie einen Entlüftungsstutzen 7.

Der Entlüftungsstutzen 7 des Siphons 5 ist mit einer Verbindungsleitung 8 an den Messstutzen 3 in der Verbrennungsluftzuführungsleitung 2 und somit an die Saugseite des Gebläses 1 angeschlossen.

## Patentansprüche

1. Heizgerät zur Brennwertnutzung durch kondensierenden Betrieb, mit einem öl- oder gasbefeuerten Gebläsebrenner, einer direkt an das Gebläse (1) angeschlossenen Verbrennungsluftzuführungsleitung (2), einer Abgasleitung sowie einer Kondenswasserleitung (4) mit einem Siphon (5), welcher eine Kammer mit einer Wasservorlage, einen Stutzen (6) zum Anschließen einer Ablaufleitung zur Kanalisation und einen Entlüftungsstutzen (7) aufweist,
**dadurch gekennzeichnet, dass** der Entlüftungsstutzen (7) des Siphons (5) mit einer Verbindungsleitung (8) an die Saugseite des Gebläses (1) angeschlossen ist.

2. Heizgerät nach Anspruch 1,
**dadurch gekennzeichnet, dass** der Entlüftungsstutzen (7) des Siphons (5) mit einer Verbindungsleitung (8) an einen Messstutzen (3) in der Verbrennungsluftzuführungsleitung (2) angeschlossen ist.

3. Heizgerät nach den Ansprüchen 1 oder 2,
**dadurch gekennzeichnet, dass** die Verbindungsleitung (8) ein Schlauch ist.

4. Heizgerät nach einem der Ansprüche 1 bis 3,
**dadurch gekennzeichnet, dass** die Verbindungsleitung (8) zwischen Siphon (5) und Saugseite des Gebläses (1) mindestens auf einem Teilstück mit einer Steigung in Richtung Gebläse (1) verlegt ist.

5. Heizgerät nach einem der Ansprüche 1 bis 5,
**dadurch gekennzeichnet, dass** die Verbindungsleitung (8) zwischen Siphon (5) und Saugseite des Gebläses (1) mit einer weiteren Verbindungsleitung zwischen der Entlüftungseinrichtung eines Ölfilters und der Saugseite des Gebläses (1) kombiniert ist.

## Claims

1. Heating device for utilizing calorific value by condensing operation, having an oil- or gas-fired blower burner, a combustion air supply line (2) connected directly to the blower (1), an exhaust gas line and a condensed water line (4) with a siphon (5) that has a chamber with a water reservoir, a stub (6) for connecting a discharge line to the drains and a venting stub (7), **characterized in that** the venting stub (7) of the siphon (5) is connected by means of a connection line (8) to the suction side of the blower (1).

2. Heating device according to Claim 1,
**characterized in that** the venting stub (7) of the siphon (5) is connected by means of a connection line (8) to a measurement stub (3) in the combustion air supply line (2).

3. Heating device according to Claim 1 or 2, **characterized in that** the connection line (8) is a hose.

4. Heating device according to one of Claims 1 to 3, **characterized in that** the connection line (8) between the siphon (5) and the suction side of the blower (1) is positioned at least on a section that rises towards the blower (1).

5. Heating device according to one of Claims 1 to 4, **characterized in that** the connection line (8) between the siphon (5) and the suction side of the blower (1) is combined with another connection line between the venting device of an oil filter and the suction side of the blower (1).

## Revendications

1. Appareil de chauffage pour l'exploitation de la condensation par fonctionnement à condensation, comprenant un brûleur à soufflante au gaz ou au mazout, une conduite d'alimentation en air comburant (2) raccordée directement à la soufflante (1), une conduite de gaz d'échappement ainsi qu'une conduite d'eau de condensation (4) avec un siphon (5) qui présente une chambre avec une réserve d'eau, une tubulure (6) pour le raccordement d'une conduite d'écoulement à la canalisation et une tubulure de désaérage (7), **caractérisé en ce que** la tubulure de désaérage (7) du siphon (5) est raccordée à une conduite de connexion (8) au côté d'aspiration de la soufflante (1).

2. Appareil de chauffage selon la revendication 1, **caractérisé en ce que** la tubulure de désaérage (7) du siphon (5) est raccordée à une conduite de connexion (8) au niveau d'une tubulure de mesure (3) dans la conduite d'alimentation en air comburant (2).

3. Appareil de chauffage selon les revendications 1 ou 2,
**caractérisé en ce que** la conduite de connexion (8) est un tuyau souple.

4. Appareil de chauffage selon l'une quelconque des revendications 1 à 3, **caractérisé en ce que** la conduite de connexion (8) entre le siphon (5) et le côté d'aspiration de la soufflante (1) est posée au moins sur une pièce partielle avec une pente montant dans la direction de la soufflante (1).

5. Appareil de chauffage selon l'une quelconque des revendications 1 à 4,
**caractérisé en ce que** la conduite de connexion (8) entre le siphon (5) et le côté d'aspiration de la soufflante (1) est combinée à une conduite de connexion supplémentaire entre le dispositif de désaérage d'un filtre à huile et le côté d'aspiration de la soufflante (1).
